**Europäisches Patentamt**

**European Patent Office**

**Office européen des brevets**

(19)

(11) Veröffentlichungsnummer: **0 004 987**
**B1**

(12) **EUROPÄISCHE PATENTSCHRIFT**

(45) Veröffentlichungstag der Patentschrift:
02.09.81

(51) Int. Cl.³: **A 47 J 43/046**, A 47 J 43/06

(21) Anmeldenummer: 79200161.2

(22) Anmeldetag: 03.04.79

(54) Elektrischer Haushalts-Mischzerkleinerer.

(30) Priorität: 19.04.78 DE 2817044
07.02.79 DE 2904498

(73) Patentinhaber: **Braun Aktiengesellschaft, Rüsselsheimer Strasse 22, D-6000 Frankfurt/Main (DE)**

(43) Veröffentlichungstag der Anmeldung:
**31.10.79 Patentblatt 79/22**

(72) Erfinder: **Falkenbach, Günther, Leiershohlstrasse 18 a, D-6236 Eschborn (DE)**
Erfinder: **Grandel, Johannes, Wolfgangsstrasse 14, D-6000 Frankfurt/Main (DE)**

(45) Bekanntmachung des Hinweises auf die Patenterteilung:
**02.09.81 Patentblatt 81/35**

(74) Vertreter: **Einsele, Rolf, Braun Aktiengesellschaft Postfach 1120 Am Schanzenfeld, D-6242 Kronberg Taunus (DE)**

(84) Benannte Vertragsstaaten:
**BE CH FR GB IT NL SE**

(56) Entgegenhaltungen:
**DE-A-2 228 189**
**DE-B-1 205 663**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Elektrischer Haushalts-Mischzerkleinerer

Die Erfindung betrifft einen elektrischen Haushalts-Mischzerkleinerer mit einer aufsetzbaren Vorrichtung, in der sich von einem Motor angetriebene Schneidwerkzeuge drehen, und einem Motorsockel mit einem elektrischen Schalter.

Bei bekannten Geräten dieser Art kommt es oft vor, besonders wenn das in der Schale befindliche, zu bearbeitende Material eine geringe Dichte aufweist, daß der Rotor des Motors sich nach dem Abschalten mehrere Sekunden lang weiterdreht. Wenn der Benutzer nicht darauf achtet, läuft er also Gefahr, seine Hand vorzeitig, vor dem vollständigen Stillstand der Messer in die Schale zu stecken und sich dadurch schwer zu verletzen.

Um den Benutzer eines Haushalts-Mischzerkleinerers dieser Art vor Verletzungen durch die noch rotierenden Messer zu bewahren, hat man bereits vorgeschlagen (DE-A-2 228 189), den Stuerstromkreis einer Bremsvorrichtung des Motors zu schließen, sobald der Deckel von der Schale mit dem zu bearbeitenden Gut entfernt wird. Zu diesem Zwecke enthält der Stromkreis des Antriebsmotors in Reihe geschaltet einen oder mehrere Schalter, deren bewegliches Schalterstück entweder eine Arbeitsstellung, in der der Stromkreis geschlossen ist, oder eine Ruhestellung, in der dieser Stromkreis offen ist, annehmen kann, wobei das bewegliche Schalterstück mindestens eines Schalters mindestens einen Kontakt aufweist, der in der Ruhestellung den Steuerstromkreis der Bremsvorrichtung des Motors schließt. Die Betätigung des Schalters von der Bremsstellung zur Einschaltung wird dabei durch Andrücken des Deckels gegen die Schale bewirkt. Dieser bekannte Haushalts-Mischzerkleinerer hat den Nachteil, daß der Benutzer während des Betriebes ständig den Deckel des Gerätes herunterdrücken muß; sich also während des Bearbeitungsvorgangs nicht vom Gerät entfernen kann. Darüber hinaus kann der bekannte Haushalts-Mischzerkleinerer nicht mit Zusatzgeräten wie beispielsweise Mixaufsatz, Zitruspresse oder Fleischwolf kombiniert werden, insofern diese Zusatzgeräte eine feste Verankerung mit dem Motorsockel verlangen.

Der vorliegenden Erfindung liegt die Aufgabe zugrunde, einen elektrischen Haushalts-Mischzerkleinerer zu schaffen, bei dem nach dem Abschalten des Motors jede Gefahr von Verletzungen durch die noch rotierenden Werkzeuge ausgeschlossen ist und der die Ausstattung mit Zusatzgeräten ermöglicht. Das Gerät soll so beschaffen sein, daß der Benutzer des Mischzerkleinerers sich nicht während des Bearbeitungsvorgangs unmittelbar am Gerät aufhalten muß. Schließlich soll die Art der Verriegelungseinrichtung für die aufsetzbare Vorrichtung so beschaffen sein, daß die aufsetzbare Vorrichtung einen anderen freien Durchmesser aufweisen kann als der Motorsockel.

Diese Aufgabe wird gemäß der Erfindung dadurch gelöst, daß die Vorrichtung von einem auf den Motorsockel aufsetzbaren und über einen Verriegelungsring mit Bolzen oder Warzen an diesem arretierbaren Halter mit Sperrbolzenwiderlager gehalten ist, wozu der im Motorsockel gehalten und geführte, um die Längsachse des Motorsockels drehbare, von einem Sperriegel bewegbare Verriegelungsring mit einer im Motorsockel längsverschiebbaren Sperrstange zusammenwirkt, die ihrerseits, je nach Stellung des Verriegelungsringes, den Bedienknopf für das An- und Abschalten des Motors freigibt oder festsetzt.

Vorzugsweise weisen Motorsockel und Halter einander zugeordnete Führungsflächen auf, wobei der Halter im Bereich der Führungsflächen als Sperrbolzenwiderlager Verriegelungsöffnungen oder Schlitze aufweist, in welche die Bolzen oder Warzen eingreifen, die am beweglichen Verriegelungsring angeordnet sind und in Ausnehmungen im Gehäuse des Motorsockels abgestützt und geführt sind.

Der Halter weist mit Vorteil mit Führungsflächen versehene Verriegelungstaschen auf, die gleichmäßig auf seiner Umfangsfläche verteilt angeordnet sind, wobei jede Verriegelungstasche mit einem Sperrbolzenwiderlager versehen ist und die Verriegelungstaschen in entsprechende, mit Führungsflächen ausgestattete Mulden einfassen, die am Motorsockel vorgesehen sind.

Bei einer Ausführungsform, bei der eine zusätzliche aufsetzbare Vorrichtung einen wesentlich größeren Durchmesser aufweist, also beispielsweise, wenn die zusätzliche Vorrichtung als Schnitzelwerk ausgebildet ist, sind erfindungsgemäß die Sperrbolzenwiderlager nach oben und außen zu abgekröpfte, am Gehäuse der zusätzlichen Vorrichtung gehalten und geführte, gegen die Kraft von Federn lotrecht verschiebbare Sperrhaken, wobei die Sperrhaken mit im Gehäuse der zusätzlichen Vorrichtung kippbar gelagerten Sperrhebeln zusammenwirken, die um horizontale Rippen kippbar gelagert sind und beim Verschwenken mit ihren freien Enden in Öffnungen eintreten, die im Deckel der Vorrichtung vorgesehen sind.

Bevorzugte Ausführungsformen der Erfindung ergeben sich ferner aus den Unteransprüchen 4 bis 7 und 9 bis 12.

Durch die Vorrichtung nach der Erfindung wird sichergestellt, daß das Gerät nur eingeschaltet werden kann, wenn die Schale für das zu zerkleinernde Gut oder ein Zusatzgerät auf den Motorsockel aufgesetzt sind und mit diesem fest verriegelt sind. Der Entriegelungsvorgang und das anschließende Abnehmen der Schalenhalterung nimmt eine solche Zeit in Anspruch, daß der Motor mit Sicherheit zum Stillstand gelangt ist, bevor eine Berührung des Werkzeugs bzw. der Messer möglich ist.

Die Erfindung läßt die verschiedensten Ausführungsmöglichkeiten zu. Zwei davon sind in den anhängenden Zeichnungen schematisch dargestellt, und zwar zeigen:

Fig. 1 und 2 einen elektrischen Haushalts-Mischzerkleinerer in perspektivischer Ansicht, wobei der Halter für die Vorrichtung zur Aufnahme des zu zerkleinernden Gutes vom Motorsockel getrennt dargestellt ist,

Fig. 3 einen Teilschnitt durch den Mischzerkleinerer, wobei die Vorrichtung zur Verriegelung des Halters, die Halterung teilweise und die von der Halterung arretierte Vorrichtung abschnittsweise dargestellt sind. Motor und Flügelmesser sind der besseren Übersichtlichkeit wegen nicht abgebildet,

Fig. 4 eine perspektivische Teildarstellung des Halters mit Verriegelungstasche,

Fig. 5 eine perspektivische Teildarstellung des Motorsockels,

Fig. 6 und 7 eine schematische und perspektivische Darstellung der wesentlichen Teile der Vorrichtung zur Verriegelung der Halterung am Motorsockel,

Fig. 8 den Motorsockel der Küchenmaschine gemäß Fig. 1 in der Frontansicht,

Fig. 9 den Motorsockel nach Fig. 8 in der Rückansicht,

Fig. 10 den Teilschnitt durch den Motorsockel mit aufgesetztem Schnitzelwerk in vergrößerter Darstellung,

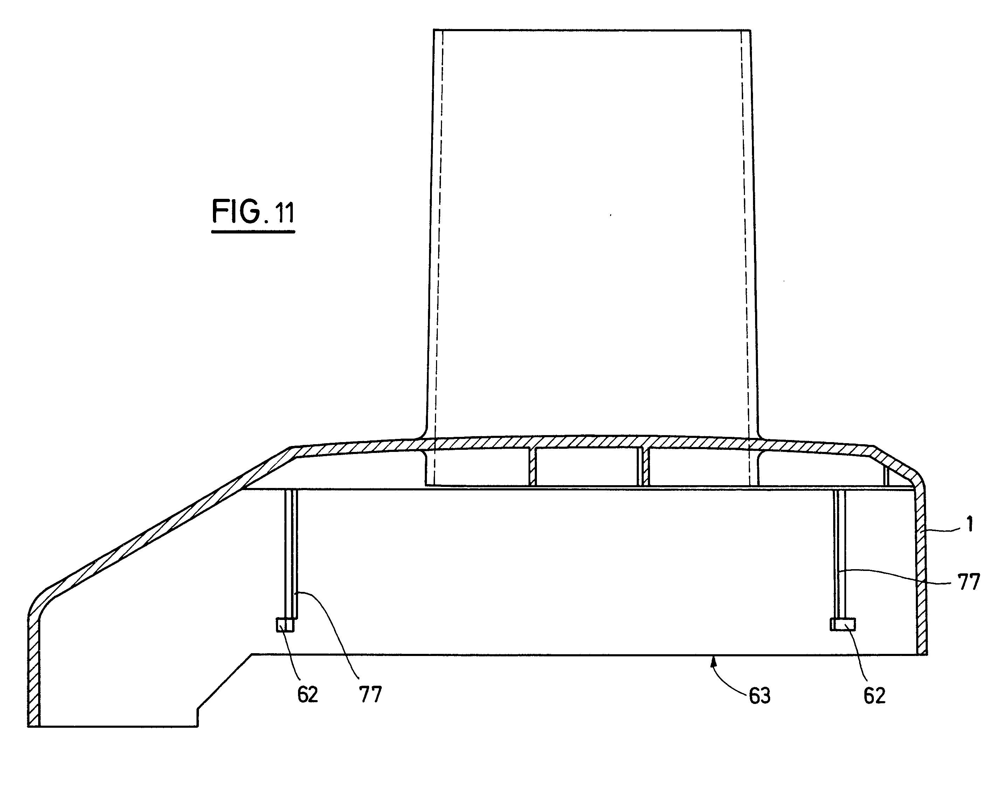

Fig. 11 den Deckel des Schnitzelwerks gemäß Fig. 10 im Längsschnitt,

Fig. 12, 13 und 14 den Sperrhaken zum Halten des Schnitzelwerks auf dem Motorsockel in verschiedenen Ansichten und

Fig. 15 und 16 den Sperrhebel zur Arretierung des Deckels des Schnitzelwerks in verschiedenen Ansichten.

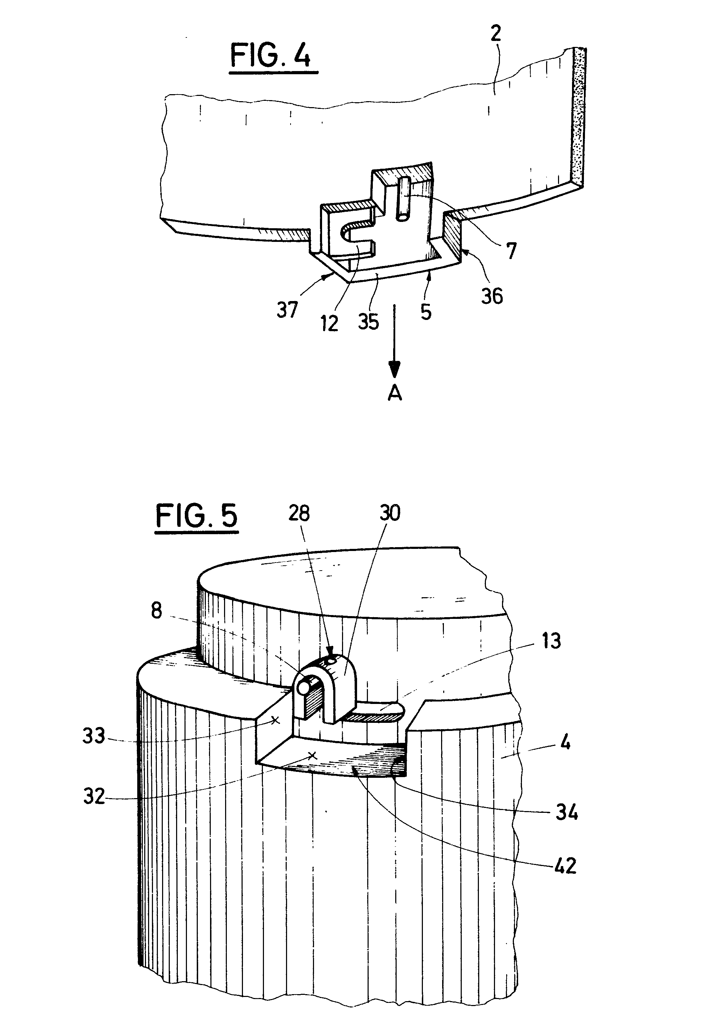

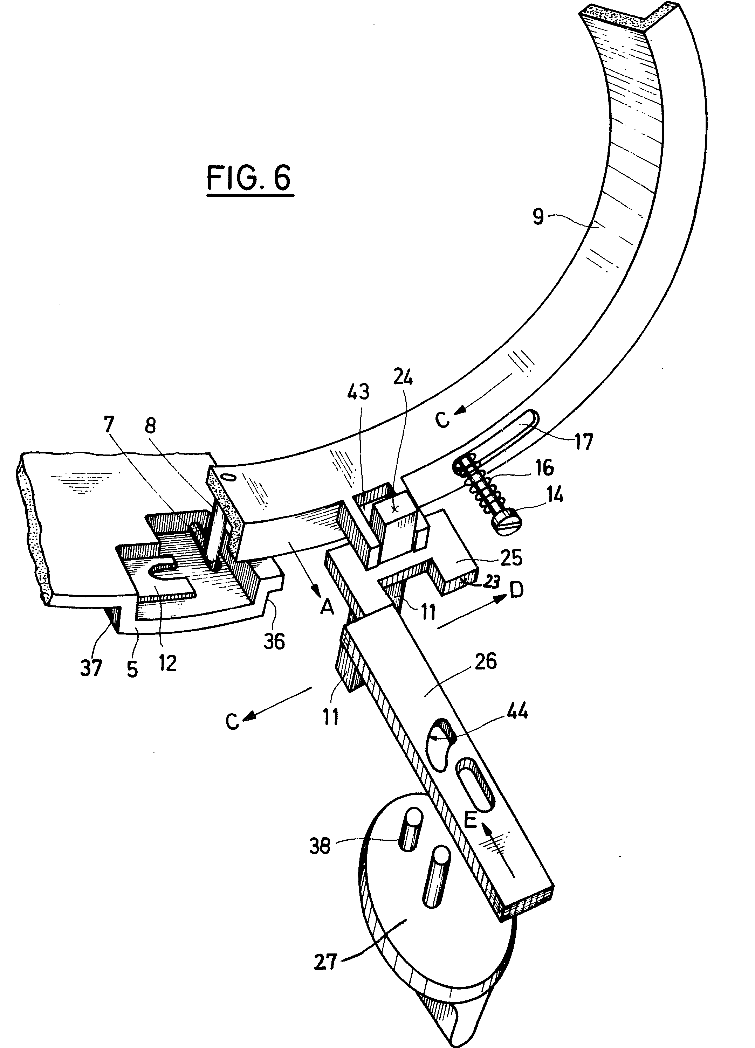

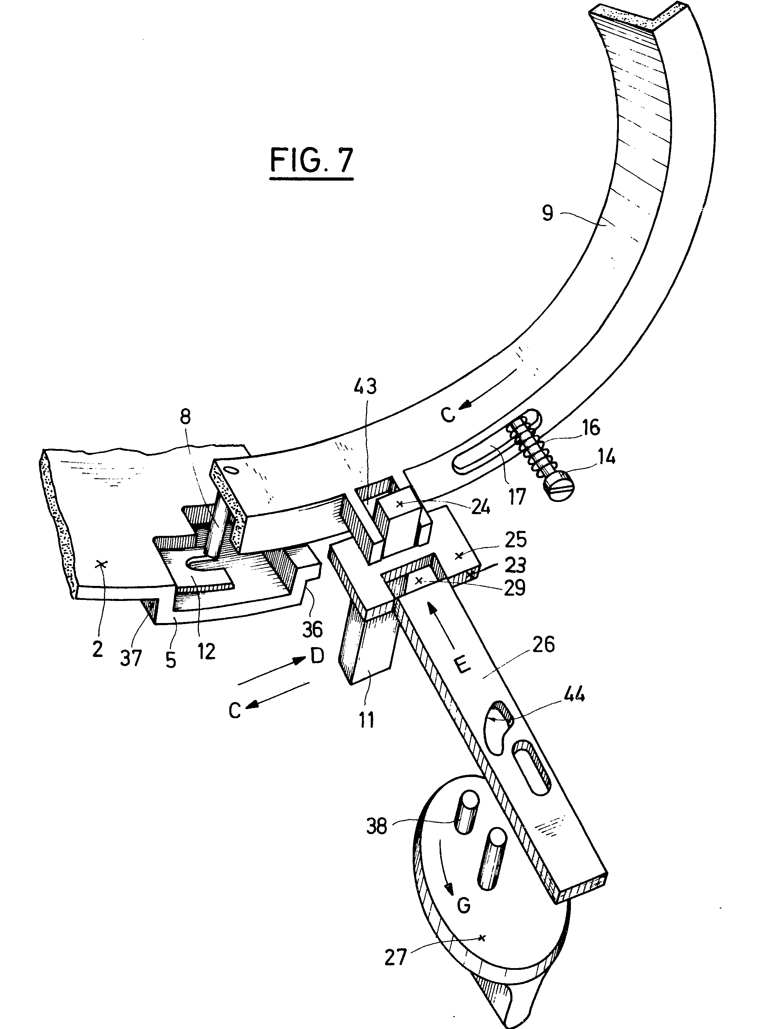

Die Vorrichtung 1 wird zusammen mit dem Schalendeckel 10 von einem Halter 2 zwischen dem Rand 20 des Halters einerseits und dem Motorsockel 4 andererseits gehalten. Um die Vorrichtung 1 mit Schalendeckel 10 am Motorsockel 4 arretieren zu können, weist diese drei auf ihrer Umfangsfläche gleichmäßig verteilt angeordnete Verriegelungstaschen 5 mit Führungsflächen 35, 36, 37 auf, die jeweils (Fig. 4) mit einem lotrecht angeordneten Finger 7 und einem Sperrbolzenwiderlager 12 ausgestattet sind. Beim Aufsetzen des Halters 2 auf den Motorsockel 4 bewegen sich die Finger 7 in Pfeilrichtung A (Fig. 4) und drücken gegen die Bolzen 8, von denen drei auf dem Umfang eines im Inneren des Motorsockels 4 angeordneten Verriegelungsringes 9 verteilt angeordnet sind und bewirken so, daß der (in den Fig. 6 und 7 dargestellte) Verriegelungsmechanismus betätigbar wird.

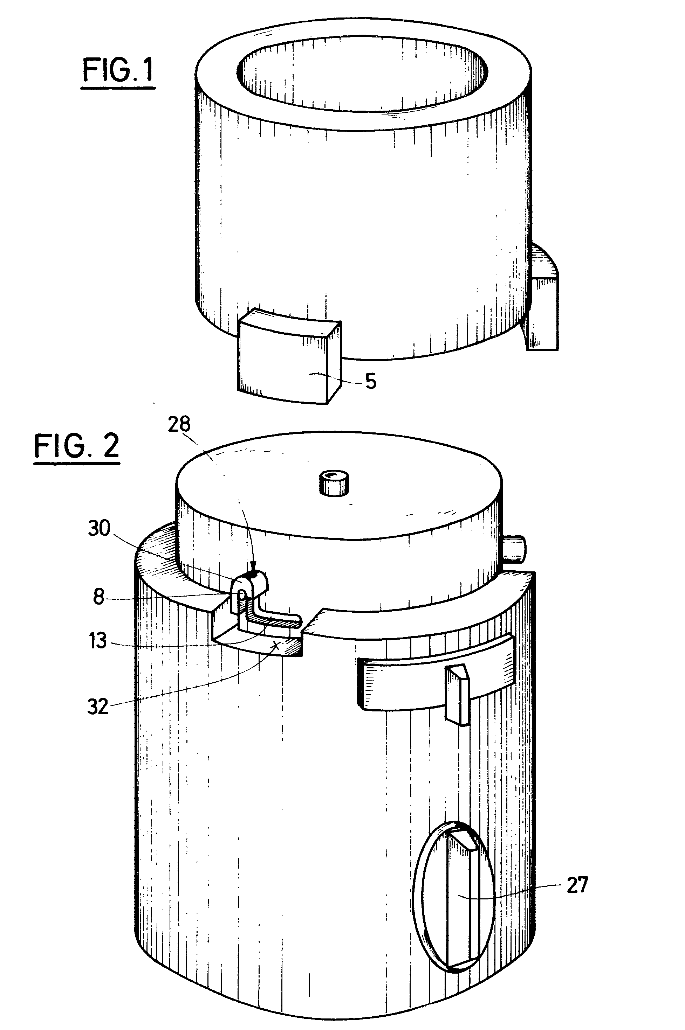

Nach dem Aufsetzen des Halters 2 und seiner Bewegung in Pfeilrichtung A wird der im Motorsockel 4 bewegbar gelagerte Verriegelungsring 9 (Fig. 6) in Pfeilrichtung A von den Fingern 7 gegen die Kraft von Federn 16 verschoben. Wird nun der Verriegelungsring 9 über den Sperriegel 11 in Pfeilrichtung C gedreht, so fassen die Bolzen 8 in die Sperrbolzenwiderlager 12 ein (Fig. 7). Die waagerecht angeordneten Bolzen 8 werden dazu in L-förmig ausgebildeten, in die Gehäusewand des Motorsockels 4 eingeschnittenen Ausnehmungen 13 (Fig. 2, 3 und 8) gehalten und geführt. Der Verriegelungsring 9 weist außerdem drei auf seinem Umfang verteilt angeordnete Langlöcher 17 auf, wobei durch jedes dieser Langlöcher 17 je eine Schraube 14 mit Feder 16 hindurchgreift, die bei 15 am Motorsockel 4 befestigt sind. Die Federn 16 drücken den Verriegelungsring 9 entgegen Pfeilrichtung A nach oben.

Damit die Finger 7 der Verriegelungstasche 5 beim Aufsetzen des Halters 2 auf den Motorsockel 4 genau auf die Bolzen 8 des Verriegelungsringes 9 treffen, sind an der Außenwand des Motorsockels 4 im Bereich der L-förmigen Langlöcher 17 nach unten zu offene Führungsnasen 30 (Fig. 5) mit Öffnungen 28 für die Finger 7 vorgesehen. Wie die Fig. 6 und 7 zeigen, kann der Verriegelungsring 9 mit Hilfe des Sperriegels 11, der in einem nicht näher dargestellten, in der Gehäusewand des Motorsockels 4 vorhandenen Langloch geführt ist, in Pfeilrichtung C bzw. D bewegt werden.

Der Sperriegel 11 weist außer einer Nase 24, mit der er in eine Ausnehmung 43 des Verriegelungsringes 9 einfaßt, noch eine Sperrgabel 25 auf, die mit der im Motorsockel 4 lotrecht bewegbaren Sperrstange 26 zusammenwirkt, in die ihrerseits wieder der Bedienknopf 27 mit der Nase 38 einfaßt. Befindet sich der Verriegelungsring 9 in der in Fig. 7 dargestellten Position, ist also der Halter 2 über die Bolzen 8 und die Sperrbolzenwiderlager 12 nach Verschieben des Sperriegels 11 in Pfeilrichtung C verriegelt, dann kann die Sperrstange 26 in Pfeilrichtung E durch Drehen des Bedienknopfes 27 im Drehsinne G lotrecht nach oben zu bewegt werden, so daß die Sperrstange 26 in die Ausnehmung 29 der Sperrgabel 25 eintritt. Nur in dieser Position (Fig. 7) kann der Bedienknopf 27 entgegen der Pfeilrichtung G gedreht und der Motor zum Antrieb der Flügelmesser eingeschaltet werden. Wird der Bedienknopf 27 in der Pfeilrichtung G gedreht, fällt die Sperrstange 26 entgegen der Pfeilrichtung E lotrecht nach unten, so daß der Sperriegel 11 in Pfeilrichtung D bewegbar ist. Nach Verschieben des Sperriegels 11 in Pfeilrichtung D (Fig. 6) ist die Sperrstange 26 arretiert, da sie mit ihrem einen Ende an der Schulter 23 anliegt, weshalb der Bedienknopf 27 wieder festgestellt (unverdrehbar) ist.

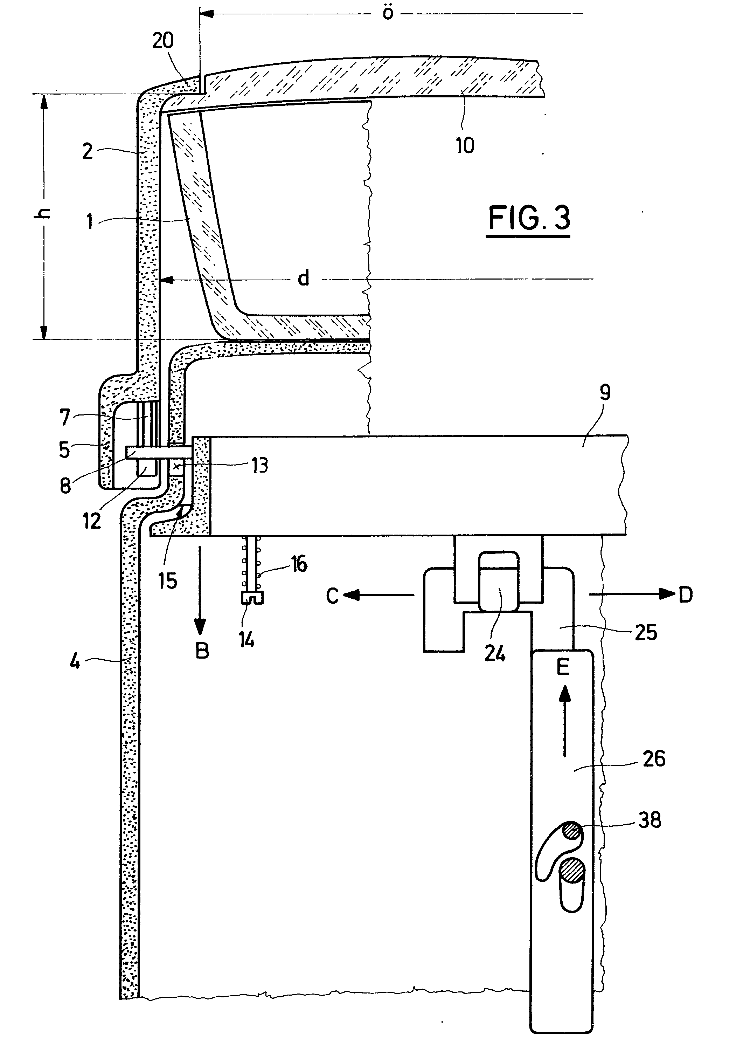

Die in Fig. 3 dargestellte Ausführungsform des Halters 2 ist nicht nur geeignet, einen Schalendeckel 10 auf einer Schale zu halten und beide Teile (10 und 1) am Motorsockel 4 zu arretieren, vielmehr können Vorrichtung 1 mit Schalendeckel 10 gegen einen Mixaufsatz, einen Fleischwolf oder eine Zitruspresse ausgetauscht werden. Derartige Zusatzgeräte benötigen lediglich ein Fußteil, welches in Durchmesser d und Höhe h (Fig. 3) der dargestellten Vorrichtung 1 mit Schalendeckel 10 entspricht. Da der Halter 2 an seiner Oberseite mit einer Öffnung ö versehen ist, können Teile der Zusatzgeräte so gestaltet sein, daß sie nach oben zu weit über den Halter 2 hinausragen. Schließlich können Halterungen vorgesehen sein, deren Maße h und ö so bemessen sind — beispielsweise bei einem Mixaufsatz —, daß es für den Benutzer unmöglich ist, von oben her durch die Öffnung die rotierenden Messer mit der Hand bzw. den Fingern zu erreichen. Die Innenflächen des Halters sind zweckmäßigerweise mit Rippen, Nocken od. dgl. (nicht dargestellt) versehen, die zuverlässig verhindern, daß Schale oder das Zusatzgerät bei eingeschaltetem Motor um die Messerachse in Drehung gelangen. Das elektrische Steuerteil im Motorsockel 4 ist im übrigen mit einer an sich bekannten Bremsvorrichtung versehen; wird also der Motor abgeschaltet, dann wird der Steuerstromkreis einer Bremsvorrichtung geschlossen, so daß der Motor augenblicklich zum Stillstand kommt. Anstelle einer elektrisch arbeitenden Bremsvorrichtung kann auch die Sperrstange 26 mit einer mechanisch arbeitenden Motorbremse gekuppelt sein. Sobald sich die Sperrstange 26 entgegen der Pfeilrichtung E bewegt — also bei abgeschaltetem Motor —, preßt dieser einen Bremsschuh gegen die Motorwelle.

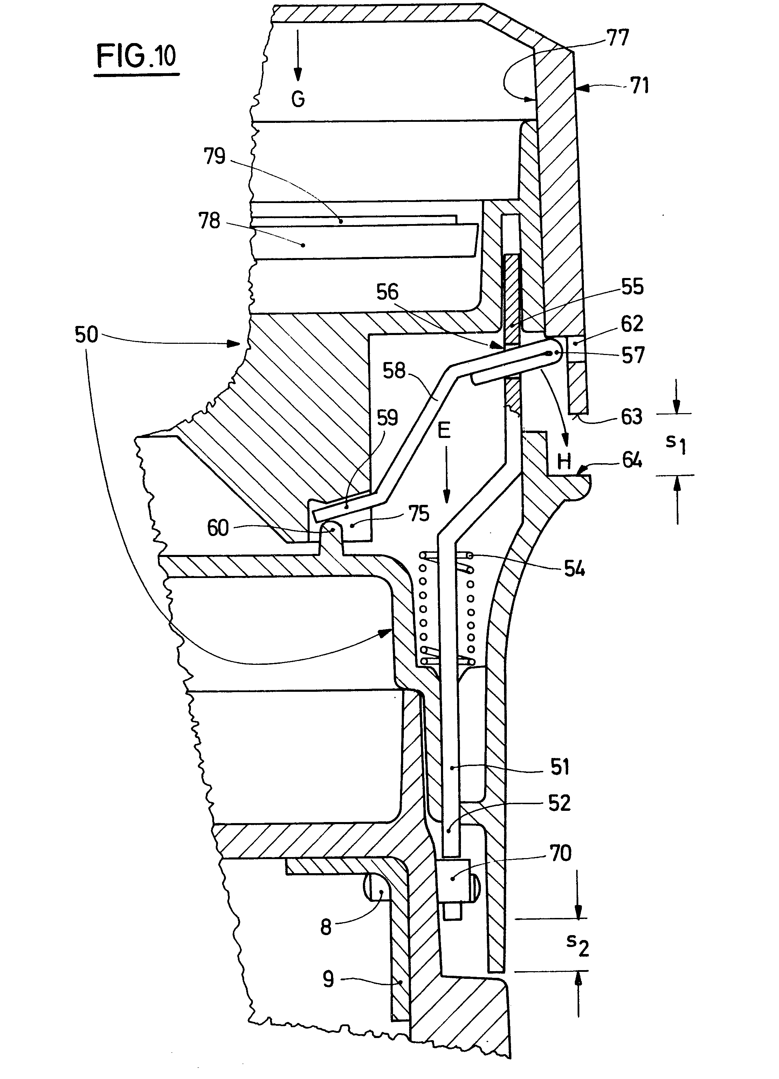

Bei dem Haushalts-Mischzerkleinerer nach Fig. 3 ist auf den Motorsockel eine Vorrichtung 1 aufgesetzt. Anstelle dieser Vorrichtung 1 ist bei dem Gerät nach Fig. 10 der Motorsockel 4 mit einem Schnitzelwerk kombiniert.

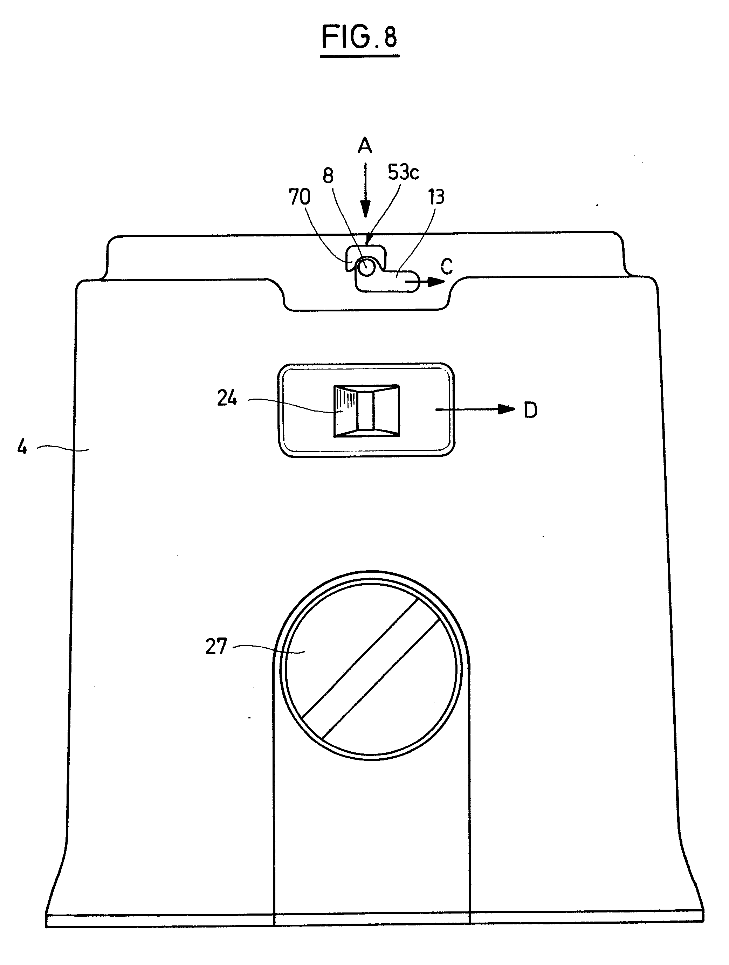

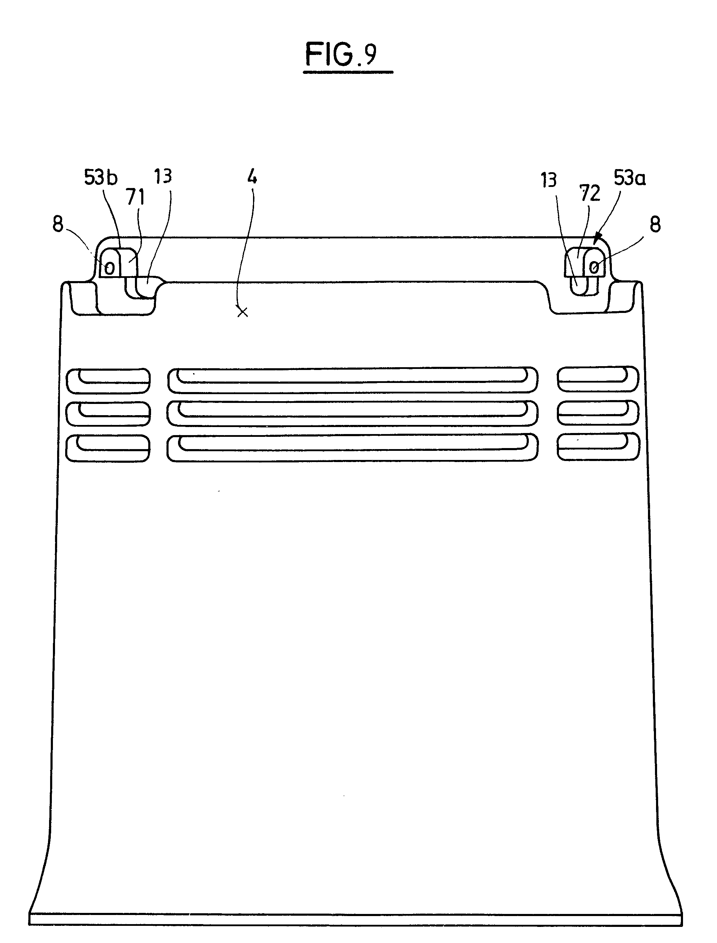

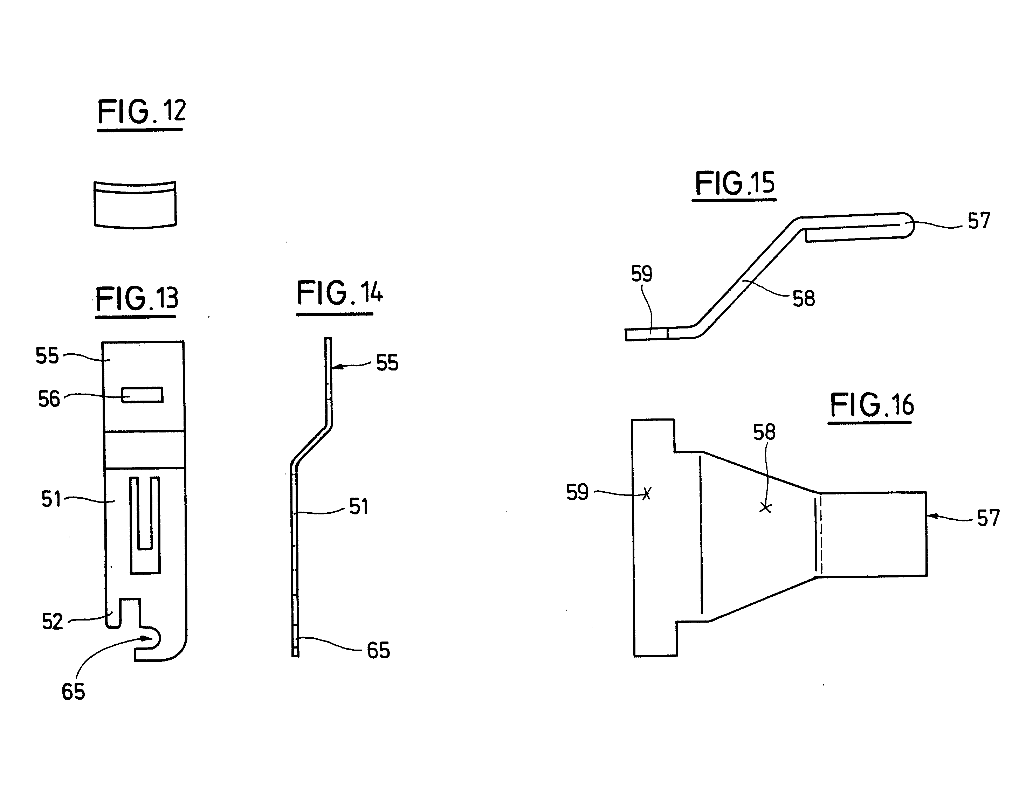

Durch die L-förmigen Ausnehmungen 13 des Motorsockels ragen radial nach außen zu Bolzen 8, die der Verriegelung des auf dem Motorsockel 4 aufsetzbaren Aggregats, in diesem Falle des Schnitzelwerks, dienen. Die Bolzen 8 sind über den weiter oben näher beschriebenen Mechanismus (Verriegelungsring 9) mit einer Nase 24 wirkverbunden, die durch Verschieben in Pfeilrichtung D die Bolzen 8 in Pfeilrichtung C (Fig. 8) bewegt. Damit die Bolzen in Pfeilrichtung C bewegbar sind, müssen diese vorher nach unten zu (in Pfeilrichtung A) verschoben werden, was beim Aufsetzen (Fig. 10) des Schnitzelwerks mit Hilfe von drei am Schnitzelwerk gelagerten Sperrhaken 51 geschieht. Jeder Sperrhaken 51 hat dazu Finger 52 (Fig. 13), die in Schlitze 53a, 53b und 53c, die in Führungsnasen 70, 71, 72 am Motorsockel 4 (Fig. 9) vorgesehen sind, eintauchen und die Bolzen 8 in Pfeilrichtung A verschieben, so daß die Bolzen 8 über das nicht näher dargestellte Gestänge in Pfeilrichtung C (Fig. 8) verschoben werden können. Jeder der drei Sperrhaken 51 ist im Gehäuse des Schnitzelwerks in Pfeilrichtung E gegen die Kraft einer Feder 54 verschiebbar gehalten und geführt. Wie Fig. 10 und 15 zeigen, weist jeder Sperrhaken 51 ein abgekröpftes Sperriegelende 55 auf, wobei jedes Sperriegelende 55 außerdem mit je einer Öffnung 56 ausgestattet ist, in die jeweils das freie Ende des Sperrhebels 57 eingreift, dessen anderes Sperrhebelende 59 im Schnitzelwerkgehäuse kippbar um die Rippe 60 gelagert ist.

Wird nun die zusätzliche Vorrichtung 50 mit dem dazugehörigen Deckel 73 auf den Motorsockel 4 aufgesetzt und nach dem Aufsetzen des ganzen Schnitzelwerks auf den Deckel Druck in Pfeilrichtung G ausgeübt, so schwenken die drei mit den Sperrhaken 51 in Verbindung stehenden Sperrhebel 58 von den Rippen 77 des Deckels 73 bewegt um die Rippen 60 in Pfeilrichtung H, wobei die freien Enden des Sperrhebels 57 in die Öffnungen 62 unterhalb der Rippen 77 eintreten, so daß nach Verriegelung des Sperrhakens 51 mit den Bolzen 8 eine Verriegelung des Deckels 73 über die Sperrhebel 58 mit dem Schnitzelwerk entsteht.

Gleichzeitig mit dem Verschwenken der Sperrhebel 58 in Pfeilrichtung H verschieben die Sperrhebel 58 die Sperrhaken 51 in Pfeilrichtung E gegen die Kraft der Federn 54, und zwar so lange (Weg s1), bis der untere Rand 63 des Deckels 73 am Bund 64 des Schnitzelwerks anliegt.

Um nahezu den gleichen Weg s2 verschieben sich dabei die drei Sperrhaken 51 und greifen mit ihren Fingern 52 in Schlitze 53a, 53b und 53c in den Führungsnasen 70, 71, 72 am Motorsockel 4 ein und drücken die Bolzen 8 in Pfeilrichtung A nach unten. Jetzt können die drei Bolzen 8 durch Verschieben der Nase 24 in Pfeilrichtung D gemeinsam und gleichzeitig in Pfeilrichtung C (= Umfangsrichtung) über den Verriegelungsring 9, der im Motorsockel 4 gelagert ist, verschoben werden, wobei die Bolzen 8 in die horizontalen Ausnehmungen 13 hineingleiten und gleichzeitig in die Verriegelungsgabeln 65 an den unteren Enden der Sperrhaken 51 einfassen, derart, daß die Sperrhaken 51 und damit das gesamte Schnitzelwerk einschließlich Deckel 73 fest am Motorsockel 4 gehalten sind.

Die im Motorsockel 4 untergebrachte Verriegelungseinrichtung ist derart ausgebildet, daß sich der Bedienknopf 27 zum Ein- und Ausschalten des Motors nur dann drehen (betätigen) läßt, wenn die Nase 24 in Pfeilrichtung D und damit gleichzeitig auch die Bolzen 8 in Pfeilrichtung C verschoben sind. Eine vollständige Sicherheit gegen unbeabsichtigtes Berühren des Schneidwerkzeugs 79 der Reibscheibe 78 ist dadurch gegeben, daß alle Bolzen 8 nur dann von der Nase 24 verschoben werden können, wenn vorher das Gehäuse der zusätzlichen Vorrichtung 50 mit Deckel 73 auf den Motorsockel 4 aufgesetzt und gegen Federkraft abwärts gedrückt wurde.

Der Motor kann auch nicht eingeschaltet werden, wenn nur das Gehäuse der zusätzlichen Vorrichtung 50 (also nicht der Deckel 73) aufgesetzt ist, da dann die Sperrhebel 58 nicht aus ihrer Ausgangsstellung verschwenkt werden.

Auflistung der Einzelteile

1 Vorrichtung
2 Halter
4 Motorsockel
5 Verriegelungstasche
7 Finger
8 Bolzen oder Warzen
9 Verriegelungsring
10 Schalendeckel
11 Sperriegel
12 Sperrbolzenwiderlager
13 Ausnehmung
14 Schraube
16 Feder
17 Langloch
20 Rand
23 Schulter
24 Nase
25 Sperrgabel
26 Sperrstange
27 Bedienknopf
28 Öffnung
29 Ausnehmung
30 Führungsnase
32 Führungsfläche
33 Führungsfläche
34 Führungsfläche
35 Führungsfläche
36 Führungsfläche
37 Führungsfläche
38 Nase
42 Mulde
43 Ausnehmung
44 Schulter
50 Gehäuse der zusätzlichen Vorrichtung
51 Sperrhaken
52 Finger
53 Schlitz
54 Feder
55 Sperriegelende
56 Öffnung
57 freies Ende des Sperrhebels
58 Sperrhebel
59 Sperrhebelende
60 Rippe
62 Öffnung
63 Rand
64 Bund
65 Verriegelungsgabel
70 Führungsnase
71 Führungsnase
72 Führungsnase
73 Deckel
75 Gehäusevorsprung
77 Rippe
78 Reibscheibe
79 Schneidwerkzeug

**Patentansprüche**

1. Elektrischer Haushalts-Mischzerkleinerer mit einer aufsetzbaren Vorrichtung (1), in der sich von einem Motor angetriebene Schneidwerkzeuge drehen, und einem Motorsockel (4) mit einem elektrischen Schalter, dadurch gekennzeichnet, daß die Vorrichtung (1) von einem auf den Motorsockel (4) aufsetzbaren und über einen Verriegelungsring (9) mit Bolzen oder Warzen (8) an diesem arretierbaren Halter (2) mit Sperrbolzenwiderlager (12) gehalten ist, wozu der im Motorsockel (4) gehalten und geführte, um die Längsachse des Motorsockels (4) drehbare, von einem Sperriegel (11) bewegbare Verriegelungsring (9) mit einer im Motorsockel (4) längsverschiebbaren Sperrstange (26) zusammenwirkt, die ihrerseits, je nach Stellung des Verriegelungsringes (9), den Bedienknopf (27) für das An- und Ausschalten des Motors freigibt oder festsetzt.

2. Elektrischer Haushalts-Mischzerkleinerer nach Anspruch 1, dadurch gekennzeichnet, daß Motorsockel (4) und Halter (2) einander zugeordnete Führungsflächen (32, 33, 34 bzw. 35, 36, 37) aufweisen, wobei der Halter (2) im Bereich der Führungsflächen (35, 36, 37) als Sperrbolzenwiderlager (12) Verriegelungsöffnungen oder Schlitze aufweist, in welche die Bolzen oder Warzen (8) eingreifen, die am bewegbaren Verriegelungsring (9) angeordnet sind und in Ausnehmungen (13) im Gehäuse des Motorsockels (4) abgestützt und geführt sind.

3. Elektrischer Haushalts-Mischzerkleinerer nach den Ansprüchen 1 und 2, dadurch gekennzeichnet, daß der Halter (2) gleichmäßig auf seiner Umfangsfläche verteilt mindestens zwei mit Führungsflächen (35, 36, 37) versehene Verriegelungstaschen (5) aufweist, wobei jede Verriegelungstasche (5) mit einem Sperrbolzenwiderlager (12) versehen ist und die Verriegelungstaschen (5) in entsprechende, mit Führungsflächen (32, 33, 34) ausgestattete Mulden (42) einfassen, die am Motorsockel (4) vorgesehen sind.

4. Elektrischer Haushalts-Mischzerkleinerer nach einem oder mehreren der vorhergehenden Ansprüche, dadurch gekennzeichnet, daß der im Motorsockel (4) drehbar und zur Drehebene lotrecht verschiebbare Verriegelungsring (9) mindestens zwei sich horizontal erstreckende Bolzen oder Warzen (8) aufweist, die mit an der aufgesetzten Vorrichtung (1) im Bereich der Sperrbolzenwiderlager (12) angeordneten Fingern (7) beim Aufsetzen der Vorrichtung auf den Motorsockel (4) in Berührung gelangen und zusammen mit dem Verriegelungsring (9) in eine Position vor den Sperrbolzenwiderlagern (12) bewegt werden.

5. Elektrischer Haushalts-Mischzerkleinerer nach einem oder mehreren der vorhergehenden Ansprüche, dadurch gekennzeichnet, daß die Ausnehmungen (13) für die Bolzen oder Warzen (8) des Verriegelungsringes (9) im Gehäuse des Motorsockels (4) L-förmig ausgebildet sind und die Bolzen oder Warzen (8) in ihrer unverriegelten Position an am Halter (2) angeordneten Fingern (7) anliegen, die ihrerseits durch Öffnungen (28) hindurchtreten, die in Führungsnasen (30) am Motorsockel (4) vorgesehen sind.

6. Elektrischer Haushalts-Mischzerkleinerer nach einem oder mehreren der vorhergehenden Ansprüche, dadurch gekennzeichnet, daß der Verriegelungsring (9) eine Ausnehmung (43) aufweist, in die die Nase (24) eines am Gehäuse des Motorsockels (4) bewegbar gelagerten Sperriegels (11) einfaßt, über den der Verriegelungsring (9) zum Zwecke des Verriegelungs- oder Entriegelungsvorgangs drehbar ist.

7. Elektrischer Haushalts-Mischzerkleinerer nach einem oder mehreren der vorhergehenden Ansprüche, dadurch gekennzeichnet, daß die Sperrgabel (25) eine Ausnehmung (29) aufweist, in die das Ende der im Motorsockel (4) lotrecht verschiebbar gelagerten Sperrstange (26) eintritt, wenn sich der Verriegelungsring (9) in der Verriegelungsposition befindet, wobei an der Sperrstange (26) eine Schulter (44) vorgesehen ist, die mit einer Nase (38) am Bedienknopf (27) zusammenwirkt und die die Sperrstange (26) beim Drehen des Bedienknopfes (27) bewegt.

8. Elektrischer Haushalts-Mischzerkleinerer nach Anspruch 4 mit einer zusätzlichen aufsetzbaren Vorrichtung, welche direkt am Motorsockel arretierbar ist, dadurch gekennzeichnet, daß die Sperrbolzenwiderlager (12) nach oben und außen zu abgekröpfte, am Gehäuse der zusätzlichen Vorrichtung (50) gehalten und geführte, gegen die Kraft von Federn (54) lotrecht verschiebbare Sperrhaken (51) sind, wobei die Sperrhaken (51) mit im Gehäuse der zusätzlichen Vorrichtung (50) kippbar gelagerten Sperrhebeln (58) zusammenwirken, die um horizontale Rippen (60) kippbar gelagert sind und beim Verschwenken mit ihren freien Enden (57) in Öffnungen (62) eintreten, die im Deckel (73) der Vorrichtung vorgesehen sind.

9. Elektrischer Haushalts-Mischzerkleinerer nach Anspruch 8, dadurch gekennzeichnet, daß die freien Enden (57) der um horizontale Achsen schwenkbaren, an dem Gehäuse der zusätzlichen Vorrichtung (50) gelagerten Sperrhebel (58) mit Nuten, Nocken oder Rippen (77) zusammenwirken, die Teile des Deckels (73) der Vorrichtung sind und beim Niederdrücken des Deckels (73) die Sperrhebel (58) zusammen mit den in Wirkverbindung mit diesen stehenden Sperrhaken (51) im Schließsinne verschieben.

10. Elektrischer Haushalts-Mischzerkleinerer nach den Ansprüchen 8 und 9, dadurch gekennzeichnet, daß die lotrecht gelagerten und verschiebbaren Sperrhaken (51) im Bereich ihrer oberen, nach außen hin abgekröpften Sperriegelenden (55) Öffnungen (56) aufweisen, in die die freien Enden der Sperrhebel (57) eingreifen.

11. Elektrischer Haushalts-Mischzerkleinerer nach den Ansprüchen 8 bis 10, dadurch gekennzeichnet, daß die Sperrhaken (51) an ihren unteren Enden Finger (52) aufweisen, die zum Zwecke der Verriegelung in Schlitze (53) eingreifen, die im Motorsockel vorgesehen sind, wobei den Fingern (52) benachbart Verriegelungsgabeln (65) vorgesehen sind.

12. Elektrischer Haushalts-Mischzerkleinerer nach den Ansprüchen 8 und 9, dadurch gekennzeichnet, daß die Sperrhebel (58) mit ihren Sperrhebelenden (59) an Rippen (60) abgestützt sind, die Teile des Gehäuses der zusätzlichen Vorrichtung (50) sind, wobei die Sperrhebel (58) gegen seitliche Verschiebungen an Gehäusevorsprüngen (75) anliegen.

## Claims

1. Electrical domestic mixer-chopper with a fittable device (1) in which rotate cutting tools driven by a motor and a motor base (4) with an electrical switch, characterized in that the device (1) ist supported by a support (2) with locking bolt abutments (12) which can be mounted on the motor base (4) and can be locked thereto by pins or studs (8) via a locking ring (9), for which purpose locking ring (9) rotatable about the longitudinal axis of base (4) and movable by a safety bolt (11) cooperates with a locking bar (26) longitudinally displaceable in base (4) and in turn, as a function of the position of locking ring (9), the locking bar releases or secures the control knob (27) for switching the motor on and off.

2. Electrical domestic mixer-chopper according to claim 1, characterized in that motor base (4) and support (2) have guide surfaces (32, 33, 35 or 35, 36, 37) associated with one another, the support (2) having locking openings or slots as locking bolt abutments (12) in the vicinity of guide surfaces (35, 36, 37) and in which engage the pins or studs (8) arranged on the movable locking ring (9), whilst being supported and guided in recesses (13) in the casing of motor base (4).

3. Electrical domestic mixer-chopper according to claims 1 and 2, characterized in that at least two locking pockets (5) provided with guidance surfaces (35, 36, 37) are uniformly distributed around the peripheral surface of support (2), each locking pocket (5) being provided with a locking bolt abutment (12), said pockets (5) engaging in corresponding troughs (42) provided with guidance surfaces (32, 33, 34).

4. Electrical domestic mexer-chopper according to one or more of the preceding claims, characterized in that the locking ring (9) which is rotatable in motor base (4) and is perpendicularly displaceable with respect to the rotation plane has at least two, horizontally extending pins or studs (8) which, on mounting the device on base (4) come into contact with fingers (7) arranged on the fitted device (1) in the vicinity of the locking bolt abutment (12) and together with the locking ring (9) can be moved into a position in front of the locking bolt abutment (12).

5. Electrical domestic mixer-chopper according to one or more of the preceding claims, characterized in that the recesses (13) for the pins or studs (8) of locking ring (9) are constructed in L-shaped manner in the casing of motor base (4) and in their unlocked position the pins or studs (8) engage on fingers (7) arranged on support (2), said fingers passing through openings (28) provided in guide projections (30) on motor base (4).

6. Electrical domestic mixer-chopper according to one or more of the preceding claims, characterized in that the locking ring (9) has a recess (43) in which engages the projection (24) of a safety bolt (11) movably mounted on the casing of motor base (4) and by means of which locking ring (9) can be rotated for locking or unlocking purposes.

7. Electrical domestic mixer-chopper according to one or more of the preceding claims, characterized in that locking fork (25) has a recess (29) into which is introduced the end of a locking bar (26) mounted in perpendicularly displaceable manner in motor base (4) when locking ring (9) is in the locked position, locking bar (26) carrying a shoulder (44) which cooperates with a projection (38) on control knob (27) and which moves the bar (26) on rotating knob (27).

8. Electrical domestic mixer-chopper according to claim 4 with an additional fittable device, which can be locked directly on the motor base, characterized in that the locking bolt abutments (12) are upwardly and outwardly offset catches (51) held and guided on the casing of the additional device (50) and perpendicularly displaceable counter to the tension of springs (54), said catches (51) cooperating with pawls (58) tiltably mounted in the casing of additional device (50) and which are mounted so as to tilt about horizontal ribs (60) and on tilting their free ends (57) enter openings (62) provided in the cover (73) of the device.

9. Electrical domestic mixer-chopper according to claim 8, characterized in that the free ends (57) of the pawls (58) pivotable about horizontal axes and mounted on the casing of additional device (50) cooperate with slots, cams or ribs (77) forming parts of the cover (73) of the device and on depressing the cover move in a closing sense pawls (58), together with the catches (51) which are in operative connection therewith.

10. Electrical domestic mixer-chopper according to claims 8 and 9, characterized in that the vertically mounted and displaceable catches (51) have in the vicinity of their upper, outwardly offset safety bolt ends (55) openings (56) into which engage the free ends (57) of pawls (58).

11. Electrical domestic mixer-chopper according to claims 8 to 10, characterized in that at the lower ends of catches (51) are provided fingers (52) which, for locking purposes, engage in slots (53) provided in motor base (4), locking forks (65) being provided in the vicinity of fingers (62).

12. Electrical domestic mixer-chopper according to claims 8 and 9, characterized in that the ends (59) of pawls (58) are supported on ribs (60), which form parts of the casing of the additional device (50) and to prevent lateral displacements the pawls (58) engage on casing projections (75).

**Revendications**

1. Mélangeur-broyeur ménager électrique comprenant un dispositif amovible (1), dans lequel tournent des outils de coupe entraînés par un moteur, et un socle-moteur (4) muni d'un interrupteur électrique, caractérisé en ce que le dispositif amovible (1) est tenu par une attache (2) munie d'un arrêt d'ergot de blocage (12), qui peut être montée sur le socle-moteur (4) et peut être bloquée sur ce dernier par l'intermédiaire d'une bague de verrouillage (9) comprenant des ergots ou chevilles, la bague de verrouillage, qui est tenue et guidée dans le socle-moteur (4), qui peut tourner autour de l'axe longitudinal du socle-moteur (4) et qui peut être mise en mouvement par un verrou de blocage (11), coopérant avec une tige de blocage (26) qui peut coulisser longitudinalement dans le socle-moteur (4) et qui, de son côté, selon la position de la bague de verrouillage (9), libére ou immobilise le bouton de manoeuvre (27) servant pour la mise en circuit et hors circuit du moteur.

2. Mélangeur-broyeur ménager électrique suivant la revendication 1, caractérisé en ce que le socle-moteur (4) et l'attache (2) présentent des surfaces de guidage (32, 33, 34 ou 35, 36, 37 respectivement), conjuguées les unes des autres, l'attache (2) présentant, dans la région des surfaces de guidage (35, 36, 37), en tant qu'arrêts d'ergots de blocage (12), des ouvertures de verrouillage ou fentes dans lesquelles s'engagent des ergots ou chevilles (8) qui sont situés sur la bague de verrouillage mobile (9) et sont appuyés et guidés dans des évidements du boîtier du socle-moteur (4).

3. Mélangeur-broyeur ménager électrique suivant les revendications 1 et 2, caractérisé en ce que l'attache (2) présente, réparties régulièrement sur sa surface périphérique, au moins deux poches de verrouillage (5) munies de surfaces de guidage (35, 36, 37), chaque poche de verrouillage (5) étant munie d'un arrêt d'ergot de blocage (12) et les poches de verrouillage (5) s'emboîtant dans des cavités correspondantes (42) équipées de surfaces de guidage (32, 33, 34) qui sont prévues sur le socle-moteur (4).

4. Mélangeur-broyeur ménager électrique suivant une ou plusieurs des revendications précédentes, caractérisé en ce que la bague de verrouillage (9), qui peut tourner et se déplacer normalement au plan de rotation dans le socle-moteur (4), présente au moins deux ergots ou chevilles (8) s'étendant horizontalement, qui entrent en contact avec des doigts (7) disposés sur le dispositif (1) mis en place, dans la région des arrêts d'ergots de blocage (12), lors de la mise en place du dispositif sur le socle-moteur (4) et sont amenés avec la bague de verrouillage (9) à une position face aux arrêts d'ergots de blocage (12).

5. Mélangeur-broyeur ménager électrique suivant une ou plusieurs des revendications précédentes, caractérisé en ce que les évidements (13) prévus pour les ergots ou chevilles (8) de la bague de verrouillage (9) sont formés en L dans le boîtier du socle-moteuer (4) et les ergots ou chevilles (8) sont adjacents, dans leur position déverrouillée, à des doigts (7) disposés sur l'attache, qui, de leur côté, pénètrent à travers des ouvertures (28) qui sont prévues dans des bossages de guidage (30) prévus sur le socle-moteur (4).

6. Mélangeur-broyeur ménager électrique suivant une ou plusieurs des revendications précédentes, caractérisé en ce que la bague de verrouillage (9) présente un évidement (43) dans lequel s'emboîte le bossage (24) d'un verrou de blocage (11) monté mobile sur le boîtier du socle-moteur (4) et par l'intermédiaire duquel on peut faire tourner la bague de verrouillage (9) pour l'opération de verrouillage ou de déverrouillage.

7. Mélangeur-broyeur ménager électrique suivant une ou plusieurs des revendications précédentes, caractérisé en ce que la fourchette de blocage (25) présente un évidement (29) dans lequel l'extrémité de la tige de blocage (26) montée mobile verticalement dans le socle-moteur (4) pénètre lorsque la bague de verrouillage (9) se trouve dans la position de verrouillage, étant prévu sur la tige de blocage (26) un épaulement (44) qui coopère avec un bossage (38) situé sur le bouton de manoeuvre (27) et qui déplace la tige de blocage (26) lorsqu'on tourne le bouton de manoeuvre (27).

8. Mélangeur-broyeur ménager électrique selon la revendication 4, comprenant un dispositif amovible supplémentaire qui peut être bloqué directement sur le socle-moteur, caractérisé en ce que les arrêts d'ergots de blocage (12) sont des crochets de blocage (51) coudés vers le haut et vers l'extérieur, tenus et guidés sur le boîtier du dispositif supplémentaire (50), capables de se déplacer verticalement en surmontant la force de ressorts (54), les crochets de blocage (51) coopérant avec des leviers de blocage (58) montés basculants dans la boîtier du dispositif supplémentaire (50), qui sont montés pour basculer autour de nervures horizontales (60) et qui, en oscillant, pénètrent par leurs extrémités libres (57) dans des ouvertures (62) qui sont prévues dans le couvercle (73) du dispositif.

9. Mélangeur-broyeur ménager électrique suivant la revendication 8, caractérisé en ce que les extrémités libres (57) des leviers de blocage (58) montés sur le boîtier du dispositif supplémentaire (50) et pouvant pivoter autour d'axes horizontaux coopèrent avec des rainures, bosses ou nervures (77) qui font partie du couvercle (73) du dispositif et, lorsqu'on abaisse le couvercle (73), déplacent les leviers de blocage (58) dans le sens de la fermeture, conjointement avec les crochets de blocage (51) qui sont en liaison effective avec ces leviers.

10. Mélangeur-broyeur ménager électrique suivant les revendications 8 et 9, caractérisé en ce que les crochets de blocage (51) montés et coulissants verticalement présentent, dans la région de leurs extrémités supérieures verrous de blocage coudées vers l'extérieur (55), des ouvertures (56) dans lesquelles s'engagent les extrémités libres des leviers de blocage (57).

11. Mélangeur-broyeur ménager électrique suivant les revendications 8 à 10, caractérisé en ce que les crochets de blocagé (51) présentent à leurs extrémités inférieures des doigts (52) qui s'engagent pour le verrouillage dans des fentes (53) qui sont prévues dans le socle-moteuer, des fourchettes de verrouillage (65) étant prévues à proximité des doigts (52).

12. Mélangeur-broyeur ménager électrique suivant les revendications 8 et 9, caractérisé en ce que les leviers de blocage (58) sont appuyées par leurs extrémités (59) contre des nervures (60) qui font partie du boîtier du dispositif supplémentaire (50), les leviers de blocage (58) étant adjacents à des saillies (75) du boîtier qui s'opposent à leurs déplacements latéraux.

FIG.1

5

FIG. 2

28

30

8

13

32

27

0 004 987

FIG. 3

FIG. 4

2

7

37  12  35  5  36

A

FIG. 5

28  30

8

13

33

32

4

34

42

# FIG. 6

# FIG. 7

# FIG.8

# FIG.9

FIG.10

0 004 987

23

FIG.11

FIG.12

FIG.15

FIG.13

FIG.14

55

56

51

52

65

55

51

65

57

59

58

59

58

57

FIG.16

0 004 987